# EUROPÄISCHE PATENTANMELDUNG

(11) **EP 0 712 192 A2**
(43) Veröffentlichungstag der Anmeldung: **15.05.1996**
(21) Anmeldenummer: 95117211.3
(22) Anmeldetag: 02.11.1995
(51) Int. Cl.: H02G 15/013

(54) **Anordnung zur Abdichtung eines ringförmigen Spaltes**

(30) Priorität: 10.11.1994 DE 9417983 U
(71) Anmelder: Alcatel Kabel AG & Co., D-30179 Hannover (DE)
(72) Erfinder: Grajewski, Franz, Dr.-Ing., D-31655 Stadthagen (DE); Stieb, Werner, Dipl.-Ing., D-31655 Stadthagen (DE)

(57) **Zusammenfassung**

Bei einer Anordnung zur Abdichtung des Spaltes zwischen einem hohlzylindrischen Körper (3,7b) und einem in dem hohlzylindrischen Körper (3,7b) befindlichen Substrat (4,9,10), insbesondere zwischen der rohrförmigen Einführung in eine Kabelmuffe und einem in die Kabelmuffe eingeführten Kabel, sitzt ein einteiliger Schlauch (5,8) aus einem Elastomer sowohl auf dem hohlzylindrischen Körper (3,7b) als auch auf dem Substrat (4,9,10) mit Vorspannung auf.

## Beschreibung

Die Erfindung betrifft eine Anordnung zur Abdichtung des Spaltes zwischen einem hohlzylindrischen Körper und einem in dem hohlzylindrischen Körper befindlichen Substrat, insbesondere zwischen der rohrförmigen Einführung in eine Kabelmuffe und einem in die Kabelmuffe eingeführten Kabel.

Die Durchführung von Kabeln durch Wände wie z.B. die Gehäusewand eines Muffenkörpers bereitet häufig Schwierigkeiten, da diese gegen Feuchtigkeit absolut dicht sein muß.

Bei einer Topf- oder Haubenmuffe nach der DE-PS 3 607 355 sind in die Öffnungen, durch welche die Kabel in das Muffeninnere geführt werden, sogenannte Kabeleingänge dichtend eingelassen, die einen schrumpfbaren Kunststoffstutzen besitzen, der auf das eingeführte Kabel aufgeschrumpft wird. Für eine sichere Abdichtung ist es erforderlich, daß zwischen dem geschrumpften Kunststoffstutzen und der Kabeloberfläche ein bei Wärmezufuhr sich verflüssigender Kleber vorgesehen ist, der beim und nach dem Schrumpfvorgang die evtl vorhandenen Hohlräume ausfüllt.

Nachteilig hierbei ist, daß man auf eine üblicherweise verwendete weiche Flamme eines Gasbrenners angewiesen ist, durch welche die Schrumpfung und das Erweichen des Klebers erreicht wird. Es besteht dann die Gefahr, daß der Kabelmantel beschädigt wird. Deshalb ist man insbesondere bei dünnen Kabeln gezwungen, auf die Kabel im Bereich des Eintritts in die Muffe eine Flammschutzfolie aufzuwickeln. Die Verwendung einer offenen Flamme ist vielerorts unerwünscht bzw. auch nicht zugelassen.

Ein weiterer gravierender Nachteil besteht darin, daß bei einem Wiederöffnen die verwendeten Schrumpfartikel nicht mehr brauchbar sind und durch neue ersetzt werden müssen.

Der Erfindung liegt die Aufgabe zugrunde, eine Anordnung zum Abdichten der eingangs erwähnten Art zu finden, welche ohne Anwendung von Wärme insbesondere ohne Flammanwendung auskommt und welche jederzeit wiedergeöffnet werden kann, wobei die Teile der Anordnung wiederverwendbar sind.

Diese Aufgabe wird gelöst durch einen einteiligen Schlauch aus einem Elastomer, der sowohl auf dem hohlzylindrischen Körper als auch auf dem Substrat mit Vorspannung aufsitzt. Der Schlauch aus einem Elastomer wird vor der Montage an einem Ende aufgeweitet, auf den hohlzylindrischen Körper aufgeschoben und aufgerollt, so daß die "Rolle" auf dem hohlzylindrischen Körper unter Vorspannung aufsitzt. Wenn sich das Substrat im Innern des hohlzylindrischen Körpers befindet, wird der Schlauch abgerollt und zum Anliegen an dem Substrat gebracht. Soll das Substrat entfernt werden, wird der Schlauch wieder aufgerollt.

Zur Verbesserung der Abdichtung bzw. um ein Verschieben des Schlauchs auf dem Substrat zu vermeiden, wird auf dem Schlauch eine Schlauchschelle befestigt. Eine solche Schlauchschelle kann auch auf dem hohlzylindrischen Körper vorgesehen sein.

Das Ende des hohlzylindrischen Körpers weist im Querschnitt dreieckförmige Zungen auf, die unter Bildung eines Konus mit ihren Spitzen auf der Oberfläche des Substrates aufliegen. Dieser konische Übergang dient zum einen, um den Durchmessersprung zwischen dem hohlzylindrischen Körper und dem Substrat auszugleichen zum anderen, um das Auf- und Abrollen des Schlauches zu erleichtern. Die Zungen können auch ein gesondertes Teil sein, welches in oder auf dem hohlzylindrischen Teil befestigt ist. Das auf dem Substrat aufliegende Ende des Schlauches ist trichterförmig aufgeweitet und weist eine Verdickung auf. Hierdurch entsteht der Vorteil, daß der Schlauch leichter aufgerollt werden kann.

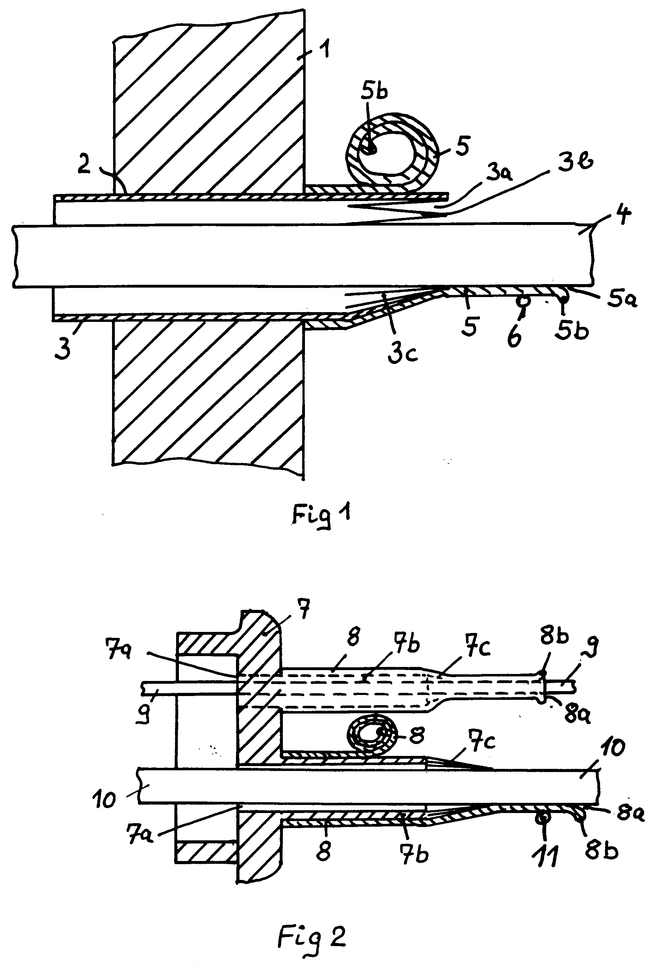

Die Erfindung ist anhand der in den Figuren 1 und 2 schematisch dargestellten Ausführungsbeispiele näher erläutert.

Die Figur 1 zeigt eine Durchführung durch eine Wand 1, in welche eine Bohrung 2 eingebracht wurde. In die Bohrung 2 ist ein Durchführungsrohr 3, z.B. aus Kunststoff, eingesetzt. Die Abdichtung zwischen der Bohrung 2 und dem Durchführungsrohr 3 ist bekannt und braucht nicht näher erläutert zu werden. Im Innern des Durchführungsrohres 3 befindet sich ein Kabel oder ein Leitungsrohr 4. Solche Durchführungen sind z.B. Hauseinführungen, durch welche Energieversorgungskabel, Telefonkabel, Fernsehkabel aber auch Gasleitungsrohre ins Innere des Gebäudes geführt werden. Da diese Einführungen in der Regel im Erdreich befindlich sind, ist eine dauerhafte Abdichtung des zwischen dem Durchführungsrohr 3 und dem Kabel 4 befindlichen Spaltes erforderlich. Hierfür ist ein Elastomerschlauch 5 vorgesehen, der im gedehnten Zustand auf das aus der Wand 1 herausragende Durchführungsrohr 3 aufgerollt ist (obere Hälfte der Figur 1). Nachdem das Kabel 4 durch das Durchführungsrohr 3 hindurchgeführt wurde, wird der Elastomerschlauch 5 abgerollt, so daß er auf dem Kabel 4 aufliegt. Die Abmessung des Elastomerschlauchs ist derart, daß im entspannten, d.h. ungedehnten Zustand sein Innendurchmesser kleiner ist als der Außendurchmesser des Kabel 4, d.h. der Elastormerschlauch 5 liegt sowohl auf den Durchführungsrohr 3 als auch auf dem Kabel mit einer Vorspannung auf (s. untere Hälfte der Figur 1). Der Elastomerschlauch 5 kann sowohl auf dem Durchführungsrohr 3 als auch auf dem Kabel 4 mittels handelsüblicher Rohrschellen wie bei 6 angedeutet, fixiert werden.

Um den Durchmessersprung zwischen dem Kabel 4 und dem Durchführungsrohr 3 auszugleichen, sind um Ende des Durchführungsrohres 3 dreieckförmige Einschnitte 3a vorgesehen, so daß ebenfalls dreieckförmige Zungen 3b gebildet werden, die unter Bildung eines konischen Übergangs 3c auf das Kabel 4 heruntergeformt werden. Darüber hinaus hat diese Maßnahme noch den Vorteil, daß der Elastormerschlauch 5 auch wieder aufgerollt werden kann, wenn dies erforderlich sein sollte. Dem gleichen Zweck dienen die trichterförmige Aufweitung 5a und die Verdickung 5b am Ende des Elastomerschlauchs 5. Eine nicht näher bezeichnete Schicht aus einer dauerplastischen Masse oder einem Gel zwischen Elastomerschlauch 5 und Durchführungsrohr 3 und Kabel 4 erhöht noch die Dichtwirkung. Die dargestellte Durchführung gestattet im begrenzten Umfang ein "Schieben" des Kabels 4 innerhalb des Durchführungsrohres 3, ohne Schaden zu nehmen.

In der Figur 2 ist ein weiteres Beispiel einer bevorzugten Anwendung der Erfindung dargestellt.

Mit 7 ist ein Muffenkopf bezeichnet, welcher als Abschluß von Haubenmuffen oder Verbindungsmuffen eingesetzt wird. Auch hier kommt es auf eine gute, dauerhafte Abdichtung des Innenraumes derartiger Muffen an.

Der Muffenkopf 7 weist mehrere Einführungsöffnungen 7a auf, an welche sich Rohrstutzen 7b anschließen, die vorteilhafterweise Teil des Muffenkopfes 7 sind. Dieses Teil, d.h. Muffenkopf 7 mit den Einführungsöffnungen 7c und dem Rohrstutzen 7b kann als Spritzgußteil aus Kunststoff gefertigt werden.

In der oberen Hälfte der Figur 2 ist ein Rohrstutzen 7b mit einem kleineren Durchmesser dargestellt, auf welchem ein Elastomerschlauch 8 im fertig montierten Zustand aufsitzt. Der Elastomerschlauch 8 sitzt ebenfalls unter Vorspannung auf einem durch den Rohrstutzen 7b und die Einführungsöffnung 7a hindurchgeführten Kabel 9.

Der untere Rohrstutzen 7b ist ebenfalls mit einem Kabel 10 belegt. In der oberen Hälfte ist der Elastomerschlauch 8 noch im aufgerollten Zustand, wogegen in der unteren Hälfte des unteren Rohrstutzens 7b der fertig montierte Zustand dargestellt ist. Auch hier sind Schellen 11 anwendbar.

Der konische Übergang 7c von den Rohrstutzen 7b zu den Kabeln 9 und 10 wird auch hier durch nicht näher bezeichnete dreieckförmige Zungen - wie bei Figur 1 - erzeugt. Der konische Übergang 7c kann auch durch ein gesondertes Bauteil erzeugt werden, welches auf dem Ende des Durchführungsrohres 3 bzw. der Rohrstutzen 7b angeordnet werden kann. In der einfachsten Ausführung ist dies ein Streifen aus Karton, in welchen dreieckförmige Ausschnitte erzeugt werden, und welcher dann nach Art einer Manschette auf das Rohrende aufgelegt und dort befestigt wird.

Der Elastomerschlauch 8 ist auch hier endseitig aufgeweitet und besitzt eine Verdickung (s.8a und 8b).

Im Anlieferzustand sind die empfindlichen Enden durch eine nicht dargestellte Kappe geschützt, welche zumindest die Zungen umgreift. Die Kappe wird durch den aufgerollten Schlauch gehalten. Vor der Montage werden die Kappen von den benötigten Rohrstutzen entfernt, wogegen die Kappen auf den noch nicht benötigten Rohrstutzen verbleiben. Auch die Kappen sind aus einem Elastomer und sitzen unter leichter Vorspannung auf dem Rohrstutzen auf.

## Patentansprüche

1. Anordnung zur Abdichtung des Spaltes zwischen einem hohlzylindrischen Körper (3,7b) und einem in dem hohlzylindrischen Körper (3,7b) befindlichen Substrat (4,9,10), insbesondere zwischen der rohrförmigen Einführung in eine Kabelmuffe und einem in die Kabelmuffe eingeführten Kabel, gekennzeichnet durch einen einteiligen Schlauch (5,8) aus einem Elastomer, der sowohl auf dem hohlzylindrischen Körper (3,7b) als auch auf dem Substrat (4,9,10) mit Vorspannung aufsitzt.

2. Anordnung nach Anspruch 1, dadurch gekennzeichnet, daß der Schlauch (5,8,) aufrollbar ist.

3. Anordnung nach einem der Ansprüche 1 bis 2, dadurch gekennzeichnet, daß der Schlauch (5,8) auf dem Substrat (4,9,10) mit einer Schelle (6,11) fixiert ist.

4. Anordnung nach einem der Ansprüche 1 bis 3, dadurch gekennzeichnet, daß das Ende des hohlzylindrischen Körpers (3,7b) im Querschnitt dreieckförmige Zungen (3b) aufweist, die unter Bildung eines Konus (3c,7c) mit ihren Spitzen auf der Oberfläche des Substrates (4,9,10) aufliegen.

5. Anordnung nach einem der Ansprüche 1 bis 4, dadurch gekennzeichnet, daß das auf dem Substrat (4,9,10) aufliegende Ende des Schlauches (5,8) trichterförmig aufgeweitet ist und eine Verdickung (5b,8b) aufweist.

6. Anordnung nach einem der Ansprüche 1 bis 5, dadurch gekennzeichnet, daß sowohl zwischen dem hohlzylindrischen Körper (3, 7b) und dem Schlauch (5,8) als auch zwischen dem Schlauch (5,8) und dem Substrat (4,9,10) eine Schicht einer dauerplastischen Masse oder eines Gels vorgesehen ist.
